# EUROPÄISCHE PATENTSCHRIFT

(11) **EP 1 180 607 B1**
(45) Veröffentlichungstag und Bekanntmachung des Hinweises auf die Patenterteilung: **03.03.2004**
(21) Anmeldenummer: 01119214.3
(22) Anmeldetag: 09.08.2001
(51) Int. Cl.: F16B 7/14, F16B 7/04, F16B 2/02

(54) **Klemmstück**
Clamping element
Pièce de serrage

(30) Priorität: 12.08.2000 DE 20013949 U
(43) Veröffentlichungstag der Anmeldung: 20.02.2002
(73) Patentinhaber: RK Rose + Krieger GmbH & Co. KG Verbindungs- und Positioniersysteme, D-32423 Minden (DE)
(72) Erfinder: Schunke, Kurt, 32427 Minden (DE); Buchholz, Bernd, 32369 Rahden (DE); Lampert, Rolf, 32584 Löhne (DE); Neubaur, Michael, 31655 Stadthagen (DE)
(74) Vertreter: Dantz, Jan Henning

(56) Entgegenhaltungen:
- DE-U- 29 822 310
- US-A- 4 111 575
- US-A- 4 497 092
- US-A- 4 639 979
- US-A- 6 155 743

## Beschreibung

Die vorliegende Erfindung betrifft ein Klemmstück gemäß dem Oberbegriff des Anspruchs 1 (DE 298 22 310 U1).

Derartige Klemmstücke finden in vielen Anwendungsbereichen Verwendung. Vorzugsweise dienen sie dazu, Teile klemmend miteinander zu verbinden. So sind sie als T-Verbinder, Winkel-Verbinder oder Parallelverbinder ausgebildet, wobei zwei Klemmteile vorgesehen sein können oder ein Klemmteil und ein angeschlossener Flansch, mit dem das Klemmstück ortsfest befestigbar ist.

Weiter kann ein solches Klemmstück Bestandteil einer Maschine sein, beispielsweise einer Linearführung, bei der das Klemmstück mittelbar oder unmittelbar an einem verfahrbaren Führungsschlitten befestigt ist.

Mit Hilfe eines solchen Klemmstücks kann ein Stab in Form eines Rohres, einer Stange oder dergleichen befestigt werden.

Je nach Anforderung werden dabei im Querschnitt unterschiedliche Stangen eingesetzt, insbesondere hinsichtlich ihres Abmaßes. Bislang müssen jeweils separate Klemmstücke verwendet werden, die ausschließlich für den eingesetzten Stab hergestellt werden müssen, d. h., das lichte Abmaß des Klemmteiles entspricht dem äußeren Querschnittsabmaß der Stange.

Dies hat jedoch zur Folge, daß praktisch für jeden Stangentyp hinsichtlich des Querschnittsabmaßes ein daran angepaßtes Klemmstück hergestellt und bevorratet werden muß, multipliziert noch durch die übrigen verschiedenen Ausbildungen, die, wie erwähnt, winkel-, L-förmig oder anders ausgebildet sind.

Die Vielfältigkeit der unterschiedlichen Klemmstücke führt nicht nur zu relativ hohen Herstellungskosten, da praktisch für jede Klemmstückart ein separates Werkzeug bei der Herstellung aus Kunststoff, oder eine separate Gießform bei der Herstellung aus Guß, erstellt werden muß.

Daneben trägt die umfangreiche Lagerhaltung der verschiedenen Klemmstücke zu Kostensteigerungen bei, so daß sich insgesamt aus wirtschaftlicher Sicht eine äußerst unbefriedigende Kostensituation ergibt. Dies insbesondere unter dem Gesichspunkt, als solche Klemmstücke in großen Stückzahlen hergestellt werden und zum Einsatz kommen.

Der vorliegenden Erfindung liegt daher die Aufgabe zugrunde, ein Klemmstück der gattungsgemäßen Art so auszubilden, daß es vielseitiger verwendbar und kostengünstiger herstellbar ist.

Diese Aufgabe wird durch ein Klemmstück gelöst, das die Merkmale des Anspruchs 1 aufweist.

Diese konstruktive Ausgestaltung erlaubt praktisch, daß ein Klemmstück die Basis für eine Vielzahl im Querschnitt unterschiedlich dimensionierter Stäbe bildet, wobei lediglich diesen angepaßte Klemmhülsen einzusetzen sind. Der durch die beiden Klemmbacken gebildete Innenraum bildet praktisch eine Aufnahmekammer für die unterschiedlichsten Klemmhülsen, die in ihrem Außendurchmesser dem lichten Durchmesser dieser Aufnahme angepaßt sind.

Nach einer vorteilhaften Ausbildung der Erfindung ist vorgesehen, daß die Klemmhülse ebenso wie das Klemmteil geschlitzt ist, wobei beide Schlitze deckungsgleich übereinander liegen, so daß die Klemmung über die Klemmbacken auf die Klemmhülse und von dieser auf den einliegenden Stab übertragen wird.

Um zu gewährleisten, daß die Schlitze immer deckungsgleich übereinander liegen, ist die Klemmhülse verdrehsicher in dem Klemmteil festgesetzt, wozu entsprechende Ausformungen vorgesehen sein können, beispielsweise in Form miteinander korrespondierender Nuten und Federn, die sich sowohl in Längsachsrichtung des Klemmteiles als auch der Klemmhülse erstrecken.

Eine lediglich partielle Erstreckung der axial ausgerichteten Nut bzw. der Feder, bei der die Nut bspw. zur Einschubseite hin geschlossen oder etwa im Mittenbereich unterbrochen ist, gewährleistet eine Arretierung der Klemmhülse in axialer Richtung und damit deren Unverlierbarkeit. Dabei ist die in die Nut eingreifende Feder entsprechend angepaßt. Überdies kann eine einliegende Stange problemlos herausgezogen werden, ohne daß die Klemmhülse ebenfalls mit austritt.

Durch die Durchmesseranpassung in der Klemmhülse und des Klemmteiles wird garantiert, daß die Klemmbacken vollflächig an der Klemmhülse anliegen. Hierdurch entsteht kein Klemmkraftverlust.

Nach einem weiteren Gedanken der Erfindung ist vorgesehen, die Klemmfläche der Klemmhülse so zu konturieren, daß Stäbe mit unterschiedlichen Querschnittskonturen problemlos aufgenommen und sicher geklemmt werden. So kommen beispielsweise Stäbe zum Einsatz, die rechteckig, quadratisch oder anders polygon oder rund sind, so daß auch hierdurch die Anwendbarkeit des Klemmstücks erheblich verbessert wird.

Durch die Ausbildung der Klemmflächen der Klemmhülse, die es erlaubt, die genannten unterschiedlichen Querschnittskonturen der Stäbe aufzunehmen, wird überdies ein Formschluß der Stäbe in dem Fall erreicht, daß sie einen wie auch immer gearteten eckigen Querschnitt aufweisen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnung beschrieben.

Die einzige Figur zeigt ein erfindungsgemäßes Klemmstück in einer Explosivdarstellung.

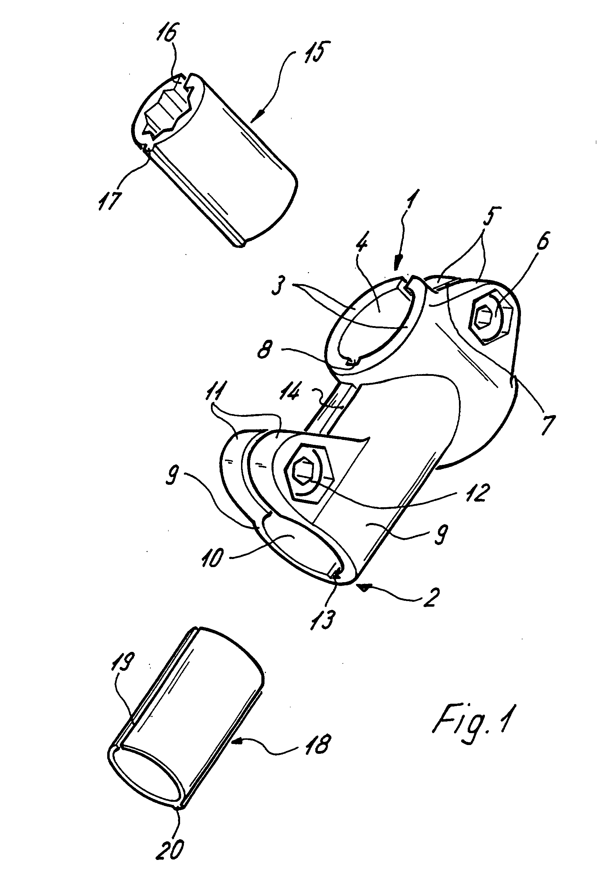

In der Figur 1 ist ein T-förmiges Klemmstück dargestellt mit einem eine durchgängige Aufnahme 4 aufweisenden Klemmteil 1 sowie einem quer zu deren Längsachse sich erstreckenden Klemmteil 2, das mit einer sacklochartigen Aufnahme 10 versehen ist.

Das Klemmteil 1 wird durch zwei Klemmbacken 3 gebildet, während das Klemmteil 2 zwei Klemmbacken 9 aufweist.

Die jeweiligen Klemmbacken 3, 9 sind durch Schlitze 7, 14 getrennt, die sich jeweils in Längsachsrichtung erstrecken.

Weiter weist jede Klemmbacke 3, 9 einen Flansch 5, 11 auf, von denen jeweils zwei sich gegenüber liegen und durch eine Schraube 6, 12 so miteinander verbunden sind, daß sie durch Zusammenziehen ein in der jeweiligen Aufnahme 4, 10 einliegendes Teil festklemmen.

Während die Flansche 5 der Klemmbacken 3, bezogen auf deren Länge, mittig angeordnet sind, sind die Flansche 11 der Klemmbacken 9 an deren freien Enden vorgesehen, so daß das einliegende Teil in diesem Bereich fest eingespannt wird.

In die Aufnahme 4 des Klemmteiles 1 ist eine Klemmhülse 15 eingeschoben, die vorzugsweise aus Kunststoff besteht, rohrförmig ausgebildet ist und sich über die gesamte Länge der Klemmbacken 3 erstreckt.

Der Außendurchmesser der Klemmhülse 15 entspricht dem lichten Durchmesser der Aufnahme 4.

Dem Schlitz 7 des Klemmteiles 1 gegenüber liegend weist die Aufnahme 4 eine sich in Längsachsrichtung erstreckende Nut 8 auf, in die eine Feder 17 der Klemmhülse 15 eingreift, so daß diese verdrehsicher in der Aufnahme 4 gehalten ist.

Deckungsgleich mit dem Schlitz 7 verläuft ein Längsschlitz 16 in der Klemmhülse 15, so daß die durch die Schraube 6 aufgebrachten Klemmkräfte uneingeschränkt auf die Klemmhülse 15 sowie ein darin liegendes Teil übertragen werden.

Die Querschnittskontur der Klemmhülse 15 ist so ausgebildet, daß Stäbe eingesteckt und geklemmt werden können, die unterschiedlichen Querschnitts sind, beispielsweise runde, quadratische oder rechteckige Querschnitte aufweisen.

In das Klemmteil 2 ist ebenfalls eine Klemmhülse eingesetzt, die mit dem Bezugszeichen 18 versehen ist.

Diese rohrförmige Klemmhülse 18 weist eine sich in Längsachsrichtung erstrekkende Feder 20 auf, die mit einer Nut 13 korrespondiert, die auf der dem Schlitz 14 gegenüber liegenden Seite der Aufnahme 10 vorgesehen ist.

Gegenüber liegend der Feder 20 ist ein durchgehender Längsschlitz 19 vorgesehen, der deckungsgleich mit dem Schlitz 14 verläuft.

Diese Klemmhülse 18 ist zur Aufnahme und Klemmung eines runden Stabes gedacht, kann in ihrer inneren Querschnittskontur aber ebenso wie die Klemmhülse 15 den aufzunehmenden Stäben angepaßt sein.

Zur Aufnahme und Klemmung der hinsichtlich ihrer Querschnittsabmaße unterschiedlichen Stäbe sind verschiedene Klemmhülsen einsetzbar, die alle gemeinsam eine dem lichten Durchmesser der Aufnahmen 4, 10 entsprechenden Außendurchmesser aufweisen, so daß je nach Bedarf zur Klemmung unterschiedlicher Stäbe zumindest innerhalb eines bestimmten Maßbereiches gleiche Klemmstücke eingesetzt werden können.

Darüber hinaus sind gleiche Klemmhülsen auch für von ihrer Art her unterschiedliche Klemmstücke einsetzbar, beispielsweise winkelförmige oder einfache, mit lediglich einer Aufnahme versehene.

## Patentansprüche

1. Klemmstück mit mindestens einem geschlitzten, dadurch zwei Klemmbacken (3, 9) bildenden Klemmteil (1, 2), in dem ein Stab oder dergleichen durch Klemmung festsetzbar ist, **dadurch gekennzeichnet, daß** in dem Klemmteil (1, 2) eine herausnehmbare Klemmhülse (15, 18) zur Aufnahme des Stabes angeordnet ist.

2. Klemmstück nach Anspruch 1, **dadurch gekennzeichnet, daß** die Klemmhülse (15, 18) verdrehsicher in dem Klemmteil (1, 2) festgelegt ist.

3. Klemmstück nach Anspruch 1, **dadurch gekennzeichnet, daß** die Klemmhülse (15, 18) weitgehend vollflächig an den Klemmbacken (3, 9) anliegt.

4. Klemmstück nach Anspruch 1. **dadurch gekennzeichnet, daß** die Klemmhülse (15, 18) einen Längsschlitz (16, 19) aufweist.

5. Klemmstück nach Anspruch 4, **dadurch gekennzeichnet, daß** der Längsschlitz (16, 19) deckungsgleich mit einem die Klemmbacken (3, 9) trennenden Schlitz (7, 14) verläuft.

6. Klemmstück nach Anspruch 1, **dadurch gekennzeichnet, daß** eine durch die Innenflächen der Klemmbacken (3, 9) gebildete Aufnahme (4, 10) eine Nut (8, 13) aufweist, in die eine Feder (17, 20) der Klemmhülse (15, 18) eingreift.

7. Klemmstück nach Anspruch 1, **dadurch gekennzeichnet, daß** die Klemmhülse (15,18) in axialer Richtung arretiert ist.

8. Klemmstück nach Anspruch 6 oder 7, **dadurch gekennzeichnet, daß** die Nut (8,13) zur Einschubseite hin geschlossen oder etwa im Mittenbereich unterbrochen ist, wobei die Feder (17,20) entsprechend angepaßt ist.

9. Klemmstück nach Anspruch 6, **dadurch gekennzeichnet, daß** die Feder (17, 20) dem Längsschlitz (16, 19) gegenüber liegend angeordnet ist.

10. Klemmstück nach Anspruch 1, **dadurch gekennzeichnet, daß** die Klemmhülse (15, 18) in ihrer inneren Querschnittskontur so ausgebildet ist, daß unterschiedliche Querschnittskonturen von Stäben weitgehend spielfrei anliegen.

11. Klemmstück nach Anspruch 1, **dadurch gekennzeichnet, daß** die Klemmhülse (15, 18) aus Kunststoff besteht.

12. Klemmstück nach Anspruch 1, **dadurch gekennzeichnet, daß** die Klemmhülse (15, 18) stirnseitig flächenbündig mit dem Klemmteil (1, 2) abschließt.

## Claims

1. Clamping piece having at least one slotted clamping part (1, 2) which thereby forms two clamping jaws (3, 9) and in which a bar or the like can be secured by clamping, **characterized in that** a removable clamping sleeve (15, 18) for receiving the bar is arranged in the clamping part (1, 2).

2. Clamping piece according to Claim 1, **characterized in that** the clamping sleeve (15, 18) is fixed in the clamping part (1, 2) in a rotationally locked manner.

3. Clamping piece according to Claim 1, **characterized in that** the clamping sleeve (15, 18) bears against the clamping jaws (3, 9) largely over the full surface area.

4. Clamping piece according to Claim 1, **characterized in that** the clamping sleeve (15, 18) has a longitudinal slot (16, 19).

5. Clamping piece according to Claim 4, **characterized in that** the longitudinal slot (16, 19) runs congruently with a slot (7, 14) separating the clamping jaws (3, 9).

6. Clamping piece according to Claim 1, **characterized in that** a receptacle (4, 10) formed by the inner surfaces of the clamping jaws (3, 9) has a groove (8, 13) in which a key (17, 20) of the clamping sleeve (15, 18) engages.

7. Clamping piece according to Claim 1, **characterized in that** the clamping sleeve (15, 18) is locked in the axial direction.

8. Clamping piece according to Claim 6 or 7, **characterized in that** the groove (8, 13) is closed towards the push-in side or is interrupted approximately in the centre region, the key (17, 20) being adapted accordingly.

9. Clamping piece according to Claim 6, **characterized in that** the key (17, 20) is arranged opposite the longitudinal slot (16, 19).

10. Clamping piece according to Claim 1, **characterized in that** the clamping sleeve (15, 18) is designed in its inner cross-sectional contour in such a way that different cross-sectional contours of bars fit largely free of play.

11. Clamping piece according to Claim 1, **characterized in that** the clamping sleeve (15, 18) is made of plastic.

12. Clamping piece according to Claim 1, **characterized in that** the clamping sleeve (15, 18) terminates flush with the end face of the clamping part (1, 2).

## Revendications

1. Pièce de serrage comportant au moins une partie de serrage (1, 2) fendue, formant de ce fait deux mâchoires de serrage (3, 9), dans laquelle il est possible de fixer, par serrage, une tige ou similaire, **caractérisée en ce qu'**une douille de serrage (15, 18) susceptible d'être retirée, destinée à recevoir la tige, est prévue dans la partie de serrage (1, 2).

2. Pièce de serrage selon la revendication 1, **caractérisée en ce que** la douille de serrage (15, 18) est fixée, en étant bloquée en rotation, dans la partie de serrage (1, 2).

3. Pièce de serrage selon la revendication 1, **caractérisée en ce que** la douille de serrage (15, 18) repose majoritairement par toute sa surface sur les mâchoires de serrage (3, 9).

4. Pièce de serrage selon la revendication 1, **caractérisée en ce que** la douille de serrage (15, 18) présente une fente longitudinale (16, 19).

5. Pièce de serrage selon la revendication 4, **caractérisée en ce que** la fente longitudinale (16, 19) coTncide avec une fente (7, 14) séparant les mâchoires de serrage (3, 9).

6. Pièce de serrage selon la revendication 1, **caractérisée en ce qu'**un logement (4, 10) formé par les surfaces intérieures des mâchoires de serrage (3, 9) présente une rainure (8, 13) dans laquelle pénètre un ressort (17, 20) de la douille de serrage (15, 18).

7. Pièce de serrage selon la revendication 1, **caractérisée en ce que** la douille de serrage (15, 18) est bloquée dans la direction axiale.

8. Pièce de serrage selon la revendication 6 ou 7, **caractérisée en ce que** la rainure (8, 13) est fermée, dans la direction d'enfilement, ou est interrompue approximativement dans la zone médiane, le ressort (17, 20) étant adapté en fonction de sa configuration.

9. Pièce de serrage selon la revendication 6, **caractérisée en ce que** le ressort (17, 20) est monté en regard de la fente longitudinale (16, 19).

10. Pièce de serrage selon la revendication 1, **caractérisée en ce que** le contour intérieur de la section transversale de la douille de serrage (15, 18) est conformé de telle sorte que des contours de sections transversales de tiges différents soient montés pratiquement sans jeu.

11. Pièce de serrage selon la revendication 1, **caractérisée en ce que** la douille de serrage (15, 18) est constituée en matière synthétique.

12. Pièce de serrage selon la revendication 1, **caractérisée en ce que**, sur sa face frontale, la douille de serrage (15, 18) se termine de façon affleurée par la partie de serrage (1, 2)
